# FASCICULE DE BREVET EUROPEEN

(11) **EP 3 671 303 B1**
(45) Date de publication et mention de la délivrance du brevet: **25.08.2021**
(21) Numéro de dépôt: 19214897.1
(22) Date de dépôt: 10.12.2019
(51) Int. Cl.: G02B 7/183, G02B 23/06, G02B 23/16, G02B 27/00

(54) **TÉLESCOPE COMPRENANT UN MIROIR SECONDAIRE MONTÉ SUR LAMES " ARAIGNÉES " COMPORTANT UN DISPOSITIF ANTI-LUMIÈRE PARASITE**
TELESKOP, DAS EINEN ZWEITEN SPIEGEL UMFASST, DER AUF SPINNENFÄNGERN MONTIERT IST UND EINE ANTI-STREULICHTVORRICHTUNG UMFASST
TELESCOPE COMPRISING A SECONDARY MIRROR MOUNTED ON WEB BLADES COMPRISING A PARASITE ANTI-LIGHT DEVICE

(30) Priorité: 18.12.2018 FR 1872927
(43) Date de publication de la demande: 24.06.2020
(73) Titulaire: Thales, 92400 Courbevoie (FR)
(72) Inventeur: LAURENT, François, 06156 Cannes La Bocca Cedex (FR)
(74) Mandataire: Marks & Clerk France

(56) Documents cités:
- GB-A- 2 437 316
- JP-A- H0 215 227
- JP-A- H0 215 227
- US-A1- 2011 176 205
- US-A1- 2014 267 722

## Description

Le domaine de l'invention est celui des télescopes, plus particulièrement des télescopes spatiaux, et plus précisément encore des télescopes spatiaux anastigmats de type « Korsch » possédant une obturation centrale.

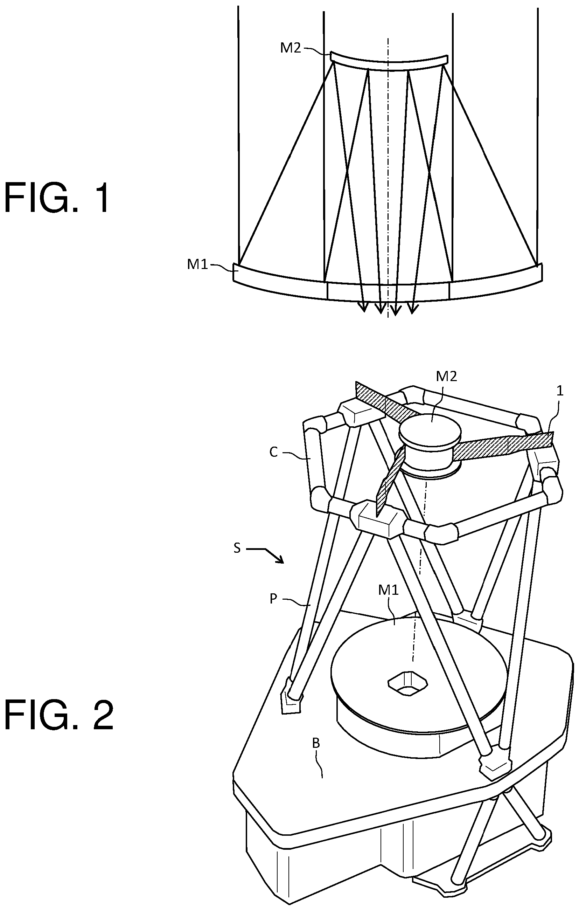

La combinaison optique d'un grand nombre de télescopes comporte un miroir primaire M1 de grande taille et au moins un miroir secondaire M2 de plus petites dimensions. Le miroir primaire est concave et le miroir secondaire est convexe. Cette combinaison optique est représentée sur la figure 1. Les rayons issus d'une source lumineuse sont d'abord réfléchis par le miroir primaire M1, puis par le miroir secondaire M2 et renvoyés dans l'ouverture centrale du miroir primaire M1. Dans le cas d'un télescope Korsch, ils sont alors réfléchis par un troisième miroir non représenté sur la figure 1. L'ensemble des trois miroirs forme alors une combinaison optique anastigmate. Les rayons lumineux sont représentés en traits fins sur cette figure 1. Par nature, le miroir M2 constitue une obturation centrale aux faisceaux incidents.

Les performances d'un tel télescope dépendent en partie du taux de lumière parasite qui atteint le plan focal et qui vient dégrader la qualité de l'image reçue.

La quantité de lumière parasite est liée au choix de la structure mécanique du télescope et des éléments qui la composent. La structure générale d'un télescope spatial est représentée sur la figure 2. Le miroir M1 est positionné sur un banc optique B qui comporte, entre autre, les organes de photoréception et d'analyse de l'image reçue. L'assemblage comporte également une structure métallique S en treillis connue également sous le terme anglo-saxon de « truss ». Celle-ci comprend six poutrelles P articulées deux à deux en triangle. Cette structure métallique supporte un cadre rigide hexagonal C. Celui-ci est le support du miroir M2 et du système de focalisation associé.

Le rattachement du miroir M2 à ce cadre C est réalisé au moyen de trois lames métalliques 1 appelées « lames araignées ». Elles sont représentées en hachurés sur la figure 2. Ces lames sont des profils plats de faible épaisseur. La section de ces lames a sensiblement la forme d'un rectangle allongé de façon à diminuer au mieux le vignettage introduit sur les faisceaux lumineux incidents.

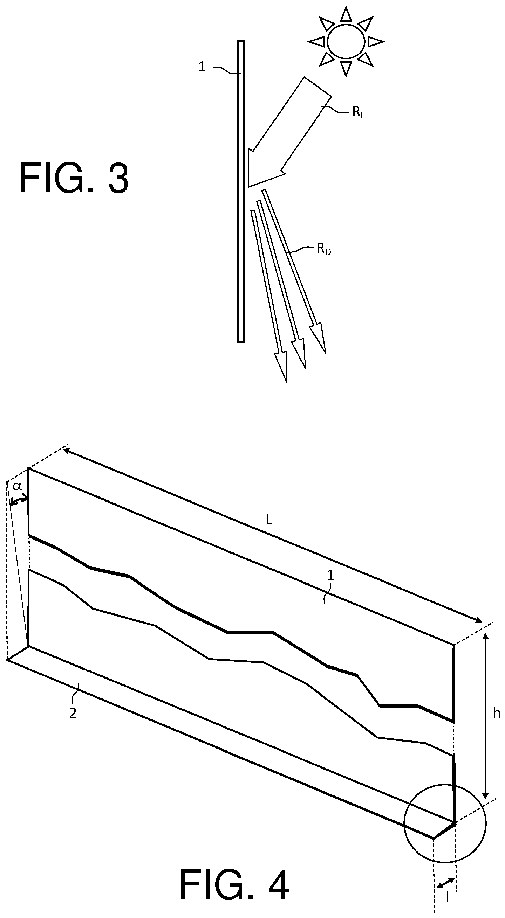

Malgré tout, les lames araignées sont disposées sur le chemin des rayons lumineux. La figure 3 représente une telle lame en vue de profil. Lorsqu'un rayonnement parasite R_{I} qui peut être, par exemple, de la lumière d'origine solaire ou terrestre ou issue de toute autre source lumineuse tombe sur la lame, une partie de cette lumière incidente est diffusée par les lames araignées. La lumière incidente et la lumière diffusée sont représentées par des flèches blanches sur la figure 3. Si l'incidence de cette lumière diffusée R_{D} est telle qu'elle entre dans le champ de l'instrument, alors elle tombe sur le photo-détecteur disposé dans le plan focal du télescope. Cette lumière diffusée augmente ainsi le taux de lumière parasite et, par conséquent, vient dégrader la qualité des images reçues.

Pour limiter ce problème, les lames araignées comportent un traitement faiblement réfléchissant et absorbant. Ces traitements sont, par exemple, des peintures noires ou des dépôts de couches minces. Cependant, malgré ces traitements, les lames araignées restent un contributeur important de lumière parasite des télescopes spatiaux.

Des lames araignées conventionnelles sont divulguées dans les documents GB 2 437 316, US 2014/267722, US 2011/176205, JP H02 15227.

Le télescope selon l'invention ne présente pas les inconvénients précédents. En effet, l'élimination de la lumière parasite est réalisée par un cache mécanique. Elle est donc de bien meilleure qualité que les solutions techniques de l'art antérieur.

Plus précisément, l'invention a pour objet un télescope tel que défini dans la revendication indépendante 1.

Des modes de réalisation supplémentaires sont définis dans les revendications indépendantes.

L'invention sera mieux comprise et d'autres avantages apparaîtront à la lecture de la description qui va suivre donnée à titre non limitatif et grâce aux figures annexées parmi lesquelles :
La figure 1 représente la combinaison optique d'un télescope optique à obturation centrale ;
La figure 2 représente la structure mécanique d'un télescope selon l'art antérieur ;
La figure 3 représente la lumière parasite générée par une lame araignée selon l'art antérieur ;
La figure 4 représente une « lame araignée », support du miroir secondaire selon l'invention ;
La figure 5 représente un agrandissement de la butée représentée en figure 4 ;
La figure 6 représente la lumière parasite générée par une lame araignée selon l'invention.

Le télescope selon l'invention comporte une structure optomécanique identique ou voisine de celle du télescope de la figure 1. Il comporte donc au moins un miroir primaire M1, un miroir secondaire M2, un banc optique B comportant les organes de réception et d'analyse, une structure mécanique S en treillis et un ensemble de plusieurs lames identiques 1 dites « lames araignées » reliant la périphérie du miroir secondaire à la partie haute de ladite structure mécanique. Généralement, la structure mécanique comporte trois lames support. Ces lames étant placées dans les faisceaux lumineux, il est avantageux d'en limiter le nombre. Elles sont, pour la même raison, disposées dans des plans parallèles aux faisceaux incidents pour réduire au mieux le vignettage introduit sur les faisceaux.

Chaque lame selon l'invention comporte au moins une butée. A titre d'exemple non limitatif, la figure 4 représente une vue en perspective d'une lame 1 selon l'invention. Cette lame 1 a une longueur L et une hauteur h. Elle comporte une butée 2 de faible épaisseur et de même longueur que celle de la lame. Cette butée est perpendiculaire à la lame. Sa largeur I est d'au moins un ordre de grandeur inférieur à la hauteur de la lame, c'est-à-dire que la largeur de la butée est au moins dix fois inférieure à la hauteur de la lame. Sur la figure 4, pour des raisons de clarté, la butée 2 est représentée avec une largeur plus importante que sa largeur réelle. Il est possible de disposer différentes butées sur une même lame à différentes hauteurs.

La disposition la plus simple est représentée sur la figure 4. La lame 1 et sa butée 2 constitue un L majuscule. La base du L est la plus proche du miroir primaire.

On définit un angle α dont la tangente est égale au rapport de la largeur I de la butée sur la hauteur h de la lame comme on le voit sur la figure 4.

Pour donner des ordres de grandeur, la largeur de la butée ne dépasse pas le millimètre.

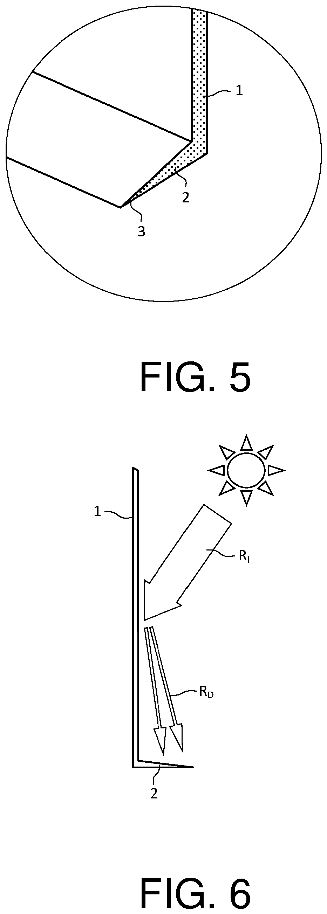

Pour éviter que le bord 3 de la butée ne génère de lumière parasite, il doit être tranchant ou en forme de lame de rasoir comme on le voit sur la figure 5 qui représente un agrandissement de la zone circulaire de la figure 4. Sur la figure 5, la butée a une section triangulaire. D'autres formes sont possibles de façon à obtenir un tranchant fin sur le bord de la butée.

Le fonctionnement optique de cette butée est représenté sur la figure 6. Lorsque la lame 1 est éclairée comme précédemment par un rayonnement parasite R_{I}, la lame va également diffuser cette lumière. Mais toute la lumière diffusée R_{D} dont l'incidence par rapport à la lame 1 est inférieure à l'angle α est bloquée par la butée 2. Si la valeur de l'angle α est égale ou supérieure à l'angle définissant le champ optique de l'instrument, alors la lumière diffusée R_{D} qui a une incidence supérieure à cet angle α peut éventuellement entrer dans l'instrument mais ne peut atteindre les organes de photoréception. On diminue ainsi de façon considérable le taux de lumière parasite et on augmente donc sensiblement la qualité de l'image.

La lame et sa butée ne nécessitent donc pas de traitements optiques particuliers dans la mesure où le traitement de la lumière parasite est lié à la géométrie et à la forme de la lame.

Concernant la réalisation, la butée peut être soit rapportée sur une lame existante, soit incorporée à la lame dès sa conception. Les positions des lames dans la structure du télescope ne changent pas. La perte supplémentaire de lumière entrant dans l'instrument due aux butées reste insignifiante, compte-tenu de leur faible largeur.

L'introduction des butées n'a donc pas d'effets sensibles sur les performances intrinsèques du télescope.

Les avantages principaux de ce système sont sa simplicité de réalisation et son efficacité sur la lumière parasite. Par ailleurs, il n'est plus nécessaire que les lames araignées comportent un traitement absorbant la lumière, ce qui simplifie leur réalisation.

## Revendications

1. Télescope comportant au moins un miroir primaire (M1), un miroir secondaire (M2), une structure mécanique (S) et un ensemble de plusieurs lames (1) identiques reliant la périphérie du miroir secondaire à ladite structure mécanique, chaque lame étant située dans un plan comportant l'axe optique du miroir secondaire, **caractérisé en ce que** chaque lame (1) comporte au moins une butée plate (2) de même longueur (L) que celle de la lame, ladite butée comportant un bord tranchant (3) et étant perpendiculaire à la lame, la largeur (l) de ladite butée étant d'au moins un ordre de grandeur inférieure à la hauteur (h) de la lame, le rapport de la largeur de la butée sur la hauteur de la lame étant sensiblement égal ou supérieur à la tangente de l'angle (a) correspondant au champ objet du télescope, la lame ne comportant pas de revêtement absorbant la lumière.

2. Télescope selon la revendication 1, **caractérisé en ce que** la largeur de la butée est inférieure ou égale à 1 millimètre.

3. Télescope selon l'une des revendications précédentes, **caractérisé en ce que** la lame et sa butée constituent un L majuscule.

4. Télescope selon l'une des revendications précédentes, **caractérisé en ce que** le télescope comporte trois lames disposées à 120 degrés les unes des autres.

5. Télescope selon l'une des revendications précédentes, **caractérisé en ce que** le miroir primaire (M1) est concave et le miroir secondaire (M2) est convexe.

## Patentansprüche

1. Teleskop, das mindestens einen primären Spiegel (M1), einen sekundären Spiegel (M2), eine mechanische Struktur (S) und eine Gruppe mehrerer identischer Klingen (1) umfasst, die den Umfang des sekundären Spiegels mit der mechanischen Struktur verbinden, wobei jede Klinge sich in einer Ebene befindet, die die optische Achse des sekundären Spiegels aufweist, **dadurch gekennzeichnet, dass** jede Klinge (1) mindestens ein flaches Auflager (2) aufweist, dessen Länge (L) dieselbe ist wie die der Klinge, wobei das Auflager eine Schneidkante (3) aufweist und senkrecht zu der Klinge ist, wobei die Breite (1) des Auflagers von mindestens einer Größenordnung ist, die geringer ist als die Höhe (h) der Klinge, wobei das Verhältnis der Breite des Auflagers zu der Höhe der Klinge im Wesentlichen gleich oder größer als die Tangente des Winkels (a) ist, was dem Objektfeld des Teleskops entspricht, wobei die Klinge keine lichtabsorbierende Beschichtung aufweist.

2. Teleskop nach Anspruch 1, **dadurch gekennzeichnet, dass** die Breite des Auflagers kleiner als oder gleich 1 Millimeter ist.

3. Teleskop nach einem der vorhergehenden Ansprüche, **dadurch gekennzeichnet, dass** die Klinge und ihr Auflager ein großes L bilden.

4. Teleskop nach einem der vorhergehenden Ansprüche, **dadurch gekennzeichnet, dass** das Teleskop drei Klingen aufweist, die um 120 Grad voneinander angeordnet sind.

5. Teleskop nach einem der vorhergehenden Ansprüche, **dadurch gekennzeichnet, dass** der primäre Spiegel (M1) konkav ist und der sekundäre Spiegel (M2) konvex ist.

## Claims

1. Telescope comprising at least one primary mirror (M1), one secondary mirror (M2), a mechanical structure (S) and a set of several identical blades (1) connecting the periphery of the secondary mirror to said mechanical structure, each blade being located in a plane comprising the optical axis of the secondary mirror, **characterized in that** each blade (1) comprises at least one flat stop (2) of the same length (L) than that of the blade, said stop comprising a cutting edge (3) and being perpendicular to the blade, the width (1) of said stopper being at least one order of magnitude less than the height (h) of the blade, the ratio of the width of the stop to the height of the blade being substantially equal to or greater than the tangent of the angle (α) corresponding to the object field of the telescope, the blade not comprising a light-absorbing coating.

2. A telescope according to claim 1, **characterized in that** the width of the stop is less than or equal to 1 millimeter.

3. Telescope according to one of the preceding claims, **characterized in that** the blade and its stop constitute a capital L.

4. Telescope according to one of the preceding claims, **characterized in that** the telescope comprises three blades arranged at 120 degrees from each other.

5. Telescope according to one of the preceding claims, **characterized in that** the primary mirror (M1) is concave and the secondary mirror (M2) is convex.
